# DEMANDE DE BREVET EUROPEEN

(11) **EP 4 199 287 A1**
(43) Date de publication de la demande: **21.06.2023**
(21) Numéro de dépôt: 22213175.7
(22) Date de dépôt: 13.12.2022
(51) Int. Cl.: H02H 7/26, H02H 3/02, H02M 1/32

(54) **SYSTÈMES ET PROCÉDÉS DE PROTECTION ÉLECTRIQUE PRÉSENTANT UNE SÉLECTIVITÉ AMÉLIORÉE**

(30) Priorité: 14.12.2021 FR 2113496
(71) Demandeur: SCHNEIDER ELECTRIC INDUSTRIES SAS, 92500 Rueil-Malmaison (FR)
(72) Inventeur: GONZALEZ, Daniel, 38420 DOMENE (FR)
(74) Mandataire: Lavoix

(57) **Abrégé**

Un procédé de protection électrique pour détecter un défaut électrique dans une installation électrique, comporte des étapes consistant à :
- mesurer (S100) des grandeurs électriques par un dispositif de protection auxiliaire, les grandeurs électriques étant associées à des conducteurs de phase ;
- analyser automatiquement (S102) les grandeurs électriques mesurées pour identifier une condition représentative d'un court-circuit entre des conducteurs de phase ;
- détecter un défaut électrique (S104), tel qu'un court-circuit entre les trois phases électriques associées aux conducteurs de phase sans implication d'un éventuel conducteur de neutre, à partir des grandeurs électriques mesurées ;
- déclencher l'ouverture (S106) d'un dispositif de commutation du dispositif de protection auxiliaire lorsqu'un défaut électrique est identifié pour déconnecter un desdits conducteurs de phase, le dispositif de commutation étant connecté sur un des conducteurs de phase.

## Description

La présente invention concerne des systèmes et des procédés de protection électrique.

L'invention concerne plus généralement le domaine de la protection électrique dans des installations de distribution d'électricité.

Il est depuis longtemps connu d'utiliser des appareils de protection électrique, tels que des disjoncteurs, qui permettent d'interrompre l'alimentation électrique d'une charge électrique ou d'une installation électrique en cas d'apparition d'un défaut électrique, tel qu'un court-circuit.

Les appareils de protection permettent aussi, en fonction de règles de sélectivité définies à l'échelle de l'installation électrique, d'isoler la partie de l'installation électrique qui est à l'origine du défaut électrique afin de permettre au reste de l'installation électrique de fonctionner normalement.

Par exemple, les appareils de protection sont coordonnés de façon hiérarchisée dans l'installation, de telle sorte que les appareils de protection situés au plus près des charges électriques et/ou des sources électriques sont réglés pour, que lorsqu'apparaît un défaut électrique, se déclencher plus rapidement que des appareils de protection éloignés placés en amont, ceci afin de n'isoler que la charge électrique ou source électrique à l'origine du défaut et d'éviter qu'un appareil de protection en amont ne se déclenche et interrompe l'alimentation électrique de tout un pan de l'installation électrique.

De tels appareils de protection comportent généralement un déclencheur, dont la fonction est de détecter un défaut électrique, en utilisant des moyens de détection électromécaniques et/ou électroniques, pour détecter lorsque l'amplitude du courant électrique devient trop élevée.

De tels déclencheurs ont pendant longtemps donné satisfaction. Cependant, des évolutions technologiques récentes, comme par exemple celles liées au développement des énergies renouvelables, nécessitent de mettre au point des appareils de protection répondant à de nouveaux besoins.

En effet, il est de plus en plus fréquent que des installations électriques locales ou domestiques soient alimentées par exemple par des sources électriques photovoltaïques et/ou par des dispositifs de stockage d'électricité capables de fonctionner ponctuellement en tant que générateurs.

De telles sources électriques sont généralement basées sur des convertisseurs de puissance à découpage dont le fonctionnement est assuré par des interrupteurs de puissance, tels que des composants semi-conducteurs de puissance. Mais, du fait de la présence de ces interrupteurs de puissance, ces sources électriques ont un comportement différent de celui des générateurs classiques en cas de défaut électrique.

En particulier, les courants de défaut, notamment les courants de court-circuit, sont beaucoup moins élevés en amplitude que dans les installations traditionnelles, à cause de caractéristiques techniques inhérentes aux composants semi-conducteurs utilisés.

Dans des installations classiques alimentées uniquement par le réseau électrique public (secteur), les courants de court-circuit habituellement rencontrés peuvent présenter des amplitudes élevées, pouvant parfois atteindre jusqu'à plusieurs kilo-ampères (kA), car leur amplitude n'est limitée que par l'impédance du transformateur amont et/ou par l'impédance des câbles de distribution. Au contraire, dans des installations comportant un ou plusieurs convertisseurs à découpage, les amplitudes des courants de défaut sont inférieures, par exemple dix fois moins importantes, ou pire.

Ainsi, dans les installations modernes comportant un ou plusieurs convertisseurs de puissance à découpage, il est plus difficile de détecter certains défauts électriques.

Il existe donc un risque qu'en cas de défaut, un appareil de protection connecté en aval près d'une source ou d'une charge électrique ne réagisse pas assez rapidement ou pas du tout par rapport à des règles de sélectivité programmées pour cet appareil, comptetenu du courant réel fourni par le convertisseur à semi-conducteurs, et qu'en conséquence ce soit la source elle-même qui en vienne à se protéger en arrêtant de fournir de l'énergie, interrompant par là même les parties de l'installation électrique qui étaient alimentées par cette source.

Cela conduit à une mauvaise qualité de service pour l'utilisateur.

C'est à ces inconvénients qu'entend plus particulièrement remédier l'invention en proposant des systèmes et des procédés de protection électrique dans une installation électrique comportant un convertisseur de puissance à découpage.

A cet effet, un aspect de l'invention concerne un procédé de protection électrique pour détecter un défaut électrique dans une installation électrique, ladite installation électrique comportant au moins une source électrique basée sur un convertisseur de puissance à découpage et un système de protection, ladite source électrique étant raccordée au reste de l'installation électrique triphasée par des conducteurs de phase, , le système de protection comprenant au moins un appareil de protection et un dispositif de protection auxiliaire associé à la source électrique, le procédé comportant des étapes consistant à :
- mesurer des grandeurs électriques par le dispositif de protection auxiliaire, les grandeurs électriques étant associées aux conducteurs de phase ;
- analyser automatiquement les grandeurs électriques mesurées, au moyen d'un dispositif électronique de commande du dispositif de protection auxiliaire, pour identifier une condition représentative d'un court-circuit entre lesdits conducteurs de phase ;
- détecter un défaut électrique, tel qu'un court-circuit entre les trois phases électriques associées auxdits conducteurs de phase sans implication d'un éventuel conducteur de neutre, à partir des grandeurs électriques mesurées ;
- déclencher l'ouverture d'un dispositif de commutation du dispositif de protection auxiliaire lorsqu'un défaut électrique est identifié par le dispositif électronique de commande, pour déconnecter un desdits conducteurs de phase, ledit dispositif de commutation étant connecté sur un desdits conducteurs de phase entre ladite source électrique et le reste de l'installation électrique.

Selon des aspects avantageux mais non obligatoires, un tel procédé peut incorporer une ou plusieurs des caractéristiques suivantes, prises isolément ou suivant toute combinaison techniquement admissible :
- les grandeurs électriques sont des tensions électriques alternatives mesurées sur les conducteurs de phase raccordant ladite source électrique au reste de l'installation électrique, la mesure desdites tensions électriques étant réalisée par des capteurs de tension du dispositif de protection auxiliaire ;
- suite à l'ouverture du dispositif de commutation par le dispositif de protection auxiliaire, le courant électrique circulant entre ladite source électrique et le reste de l'installation électrique dans lesdits conducteurs de phase qui n'ont pas été ouverts, ce courant conduisant au déclenchement d'au moins un des appareils de protection.
- analyser automatiquement les grandeurs électriques mesurées comporte une comparaison d'au moins une partie des valeurs mesurées avec un seuil de référence prédéfini ou avec une forme d'onde de référence, et dans lequel un défaut électrique tel qu'un court-circuit entre les trois phases électriques est détecté si les valeurs mesurées sont considérées comme suffisamment basses et/ou similaires.
- les appareils de protection sont configurés de manière à présenter une sélectivité prédéfinie à l'échelle de l'installation électrique .

Selon un autre aspect l'invention concerne un système de protection électrique pour une installation électrique comportant au moins une source électrique basée sur un convertisseur de puissance à découpage, le système de protection comportant au moins un appareil de protection électrique et un dispositif de protection auxiliaire (20) associé à la source électrique, le dispositif de protection auxiliaire étant configuré pour :
- mesurer des grandeurs électriques par le dispositif de protection auxiliaire, les grandeurs électriques étant associées aux conducteurs de phase ;
- analyser automatiquement les grandeurs électriques mesurées, au moyen d'un dispositif électronique de commande du dispositif de protection auxiliaire, pour identifier une condition représentative d'un court-circuit entre lesdits conducteurs de phase ;
- détecter un défaut électrique, tel qu'un court-circuit entre les trois phases électriques associées auxdits conducteurs de phase, à partir des grandeurs électriques mesurées ;
- déclencher l'ouverture d'un dispositif de commutation du dispositif de protection auxiliaire lorsqu'un défaut électrique est identifié par le dispositif électronique de commande, pour déconnecter un desdits conducteurs de phase, ledit dispositif de commutation étant connecté sur un desdits conducteurs de phase entre ladite source électrique et le reste de l'installation électrique.

Selon des aspects avantageux mais non obligatoires, un tel procédé peut incorporer une ou plusieurs des caractéristiques suivantes, prises isolément ou suivant toute combinaison techniquement admissible :
- le dispositif de commutation comporte un interrupteur électromécanique, ou un interrupteur à semi-conducteurs ou un interrupteur hybride ;
- le dispositif de protection auxiliaire est intégré à un appareil de protection associé à ladite source électrique ;
- le dispositif de protection auxiliaire est un appareil distinct d'un appareil de protection associé à ladite source électrique.

Selon un autre aspect, l'invention concerne une installation électrique comportant une source électrique basée sur un convertisseur de puissance à découpage et un système de protection.

L'invention sera mieux comprise et d'autres avantages de celle-ci apparaîtront plus clairement à la lumière de la description qui va suivre, donnée uniquement à titre d'exemple et faite en référence aux dessins annexés, dans lesquels :
[Fig 1] la figure 1 est un schéma synoptique d'un exemple d'une installation électrique comportant un système de protection électrique conforme à l'invention ;
[Fig 2] la figure 2 représente plus en détail une partie du système de protection électrique de la figure 1 ;
[Fig 3] la figure 3 est un schéma synoptique d'un dispositif de commande de l'installation électrique de la figure 1 ;
[Fig 4] la figure 4 représente un exemple d'évolution d'un courant électrique au cours du temps lors du fonctionnement du dispositif de protection électrique de la figure 1 ;
[Fig 5] la figure 5 est un schéma bloc représentant un exemple d'un procédé conforme à l'invention.

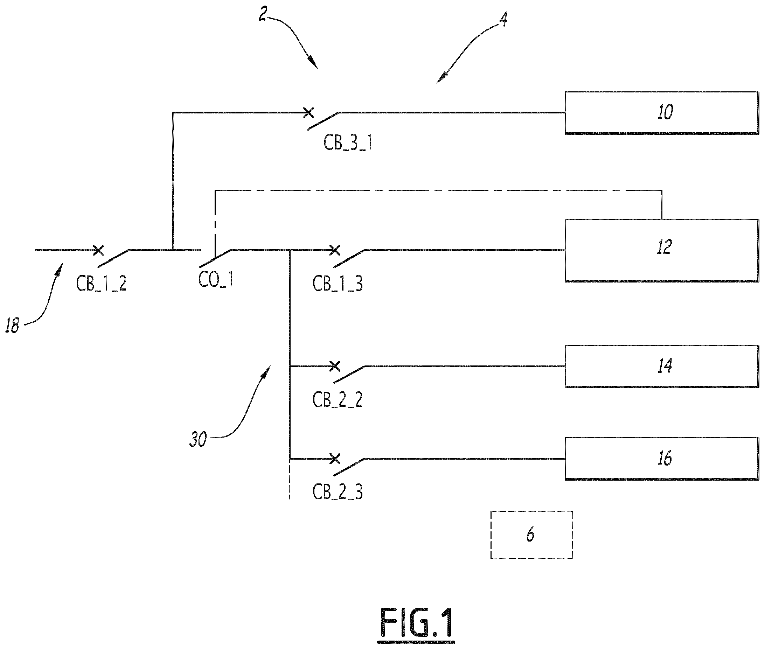

La figure 1 représente un exemple d'installation électrique 2, telle qu'une installation de distribution d'électricité dans un bâtiment ou dans un groupe de bâtiments.

L'installation électrique 2 comporte au moins un réseau électrique, des charges électriques, une source électrique comportant un convertisseur de puissance à découpage incluant un ou des interrupteurs de puissance, tels que des composants semi-conducteurs de puissance. Dans ce qui suit, cette source électrique est dite être basée sur des semi-conducteurs. L'installation comprend aussi un organe de séparation de l'installation électrique du réseau électrique, des organes de protection et des conducteurs électriques permettant de distribuer le courant produit par la ou les sources électriques vers la ou les charges électriques.

L'installation électrique 2 est ici configurée pour distribuer un courant alternatif (AC).

De préférence, l'installation électrique 2 est configurée pour distribuer un courant triphasé, sans ligne de neutre. Le nombre de conducteurs électriques utilisés pour raccorder chaque source ou chaque charge est donc adapté en conséquence (par exemple, trois conducteurs électriques distincts respectivement associés aux trois phases).

De préférence, au moins l'une des sources électriques de l'installation électrique 2 comporte ou est basée sur un convertisseur de puissance à découpage, tel qu'un onduleur, le convertisseur de puissance comportant des composants semi-conducteurs de puissance, tels que des transistors.

L'installation 2 comporte également un système de protection électrique 4 configuré pour protéger l'installation 2 contre des défauts électriques et plus particulièrement contre des courts circuits.

Le système de protection 4 comporte par exemple un ou plusieurs appareils de commutation électrique, tels que des contacteurs, et plusieurs appareils de protection électrique, tels que des disjoncteurs.

Les appareils de protection comportent chacun un déclencheur capable de mesurer le courant électrique et de déclencher l'ouverture de l'appareil de protection correspondant lorsqu'un défaut électrique, tel qu'un court-circuit, est détecté.

Les déclencheurs comportent par exemple des capteurs aptes à mesurer un courant alternatif, de préférence pour chaque phase électrique et peuvent être associés aux différents appareils de protection électrique.

Le système de protection 4 comporte également un dispositif de protection auxiliaire 6 dont le rôle sera décrit plus en détail dans ce qui suit.

Le dispositif de protection auxiliaire 6 est de préférence connecté pour protéger une source électrique (ou à une charge électrique réversible capable de fonctionner en tant que source électrique) comportant ou étant associée à un convertisseur de puissance à découpage.

Dans l'exemple illustré sur la figure 1, l'installation 2 comporte une première charge électrique 10, un dispositif de stockage d'électricité 12, des deuxièmes charges électriques 14 et 16, et un point de raccordement à une source électrique classique telle qu'un réseau électrique de distribution 18 (aussi nommé secteur).

Le dispositif de stockage d'électricité 12, qui comporte par exemple au moins une batterie électrochimique (ou tout autre type de stockage d'énergie), peut fonctionner alternativement comme une charge électrique (lorsqu'il est en cours de stockage ou de maintien d'énergie) ou comme une source électrique (lorsqu'il fournit de l'énergie pour alimenter l'installation 2). Autrement dit, le dispositif de stockage 12 peut être vu comme une charge électrique réversible.

Le dispositif de stockage d'électricité 12 est, par exemple, une batterie ou un ensemble de batteries dans une installation fixe de stockage d'électricité (ou tout autre type de stockage d'énergie comme par exemple une centrale à inertie). Il peut aussi s'agir d'un véhicule électrique connecté à une borne de chargement reliée à l'installation 2.

Dans certaines installations, on peut optionnellement distinguer les charges électriques dites critiques, qui dans la mesure du possible ne doivent pas être interrompues, de charges électriques ordinaires dites non-critiques, pour lesquelles une interruption de l'alimentation peut être tolérée dans une certaine mesure.

Par exemple, la première charge électrique 10 est une charge non-critique et les deuxièmes charges électriques 14 et 16 sont des charges électriques critiques, cet exemple n'étant pas limitatif.

Les charges critiques 14 et 16 sont par exemple connectées de façon à pouvoir être facilement alimentées par le dispositif de stockage d'électricité 12 lorsque la source 18 est indisponible.

Les sources 12 et 18 sont connectées à un répartiteur principal 30 lui-même connecté aux charges électriques 10, 14 et 16.

Par exemple, le point de raccordement au réseau électrique 18 est connecté au répartiteur 30 par l'intermédiaire d'un appareil de protection électrique, tel qu'un disjoncteur, noté CB_1_2 et d'un appareil de commutation CO_1, tel qu'un contacteur, qui dans cet exemple peut être piloté par le dispositif de stockage d'électricité 12, par exemple pour déconnecter le réseau électrique 18 lorsque le dispositif de stockage d'électricité 12 fournit suffisamment d'électricité à l'installation 2.

Le dispositif de stockage d'électricité 12 est connecté au répartiteur 30 par l'intermédiaire d'un appareil de protection électrique, tel qu'un disjoncteur, noté CB_1_3.

La première charge électrique 10 est connectée au répartiteur 30 par l'intermédiaire d'un appareil de protection électrique, tel qu'un disjoncteur, noté CB_3_1.

Les deuxièmes charges électriques 14 et 16 sont connectées au répartiteur 30 par l'intermédiaire d'appareils de protection électrique, tel que des disjoncteurs, respectivement notés CB_2_2 et CB_2_3.

L'installation 2 pourrait être construite différemment en variante, par exemple avec des charges différentes et/ou avec des sources électriques différentes et/ou posséder un nombre différent d'appareils de protection ou de commutation et/ou présenter un agencement différent.

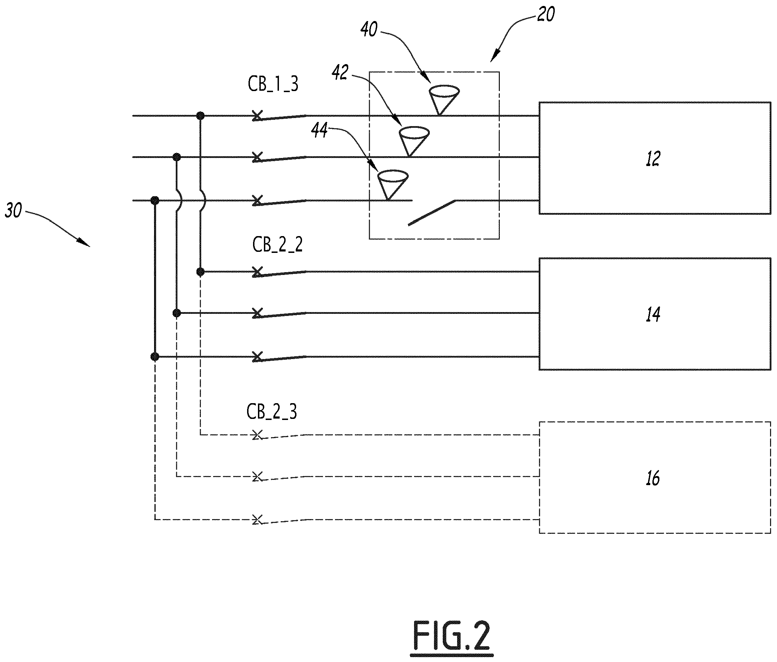

La figure 2 représente schématiquement un exemple du dispositif de protection auxiliaire 6 ici associé au dispositif de stockage d'électricité 12 et portant ici la référence 20.

Dans cet exemple, le dispositif de stockage d'électricité 12 est connecté au reste de l'installation triphasé 2, par trois conducteurs de phase.

L'exemple qui suit est décrit en référence au dispositif de stockage d'électricité 12, mais en variante le dispositif de protection auxiliaire 20 peut être utilisé sur tout dispositif électrique de l'installation 2 agissant comme source de tension ou étant susceptible d'agir en tant que tel, ce dispositif électrique comportant ou étant associée à un convertisseur de puissance à découpage, comprenant par exemple des composants semi-conducteurs. Il pourrait par exemple s'agir d'une source photovoltaïque, comportant un ou plusieurs panneaux solaires connectés à un tel convertisseur de puissance à découpage.

En variante, le système de protection 4 pourrait aussi comporter plusieurs dispositifs de protection auxiliaire 20 dans le cas où l'installation 2 comporte plusieurs sources électriques comportant ou étant basée sur un convertisseur de puissance à découpage.

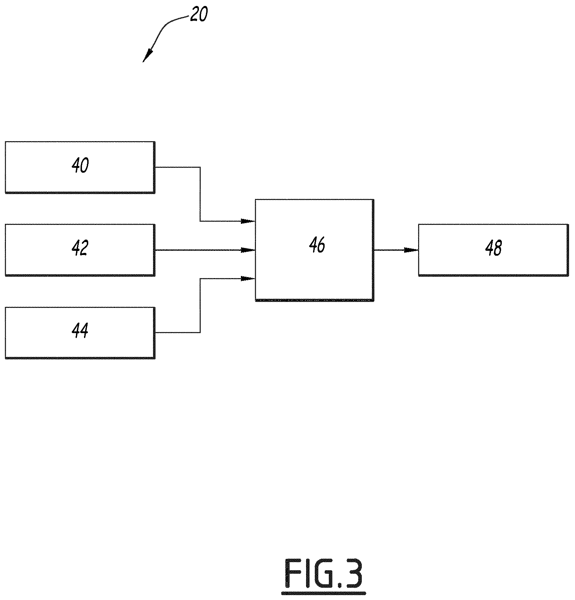

Comme illustré sur la figure 2 et sur la figure 3, le dispositif de protection auxiliaire 20 comporte des capteurs de tension 40, 42 et 44, un dispositif électronique de commande 46 et un dispositif de commutation 48 associé à l'une desdites phases électriques.

Dans des modes de réalisation alternatifs, le dispositif de protection auxiliaire 20 pourrait, dans des variantes non décrites ci-après, utiliser aussi une ou des mesures de courant pour participer à la décision prise par le dispositif de protection auxiliaire 20, soit à la place des capteurs de tension 40, 42 et 44, soit en complément des capteurs de tension 40, 42 et 44.

Comme illustré sur la figure 2, chacun des capteurs de tension 40, 42 et 44 est configuré pour mesurer la tension électrique par phase ou entre phases alimentant les charges critiques de l'installation.

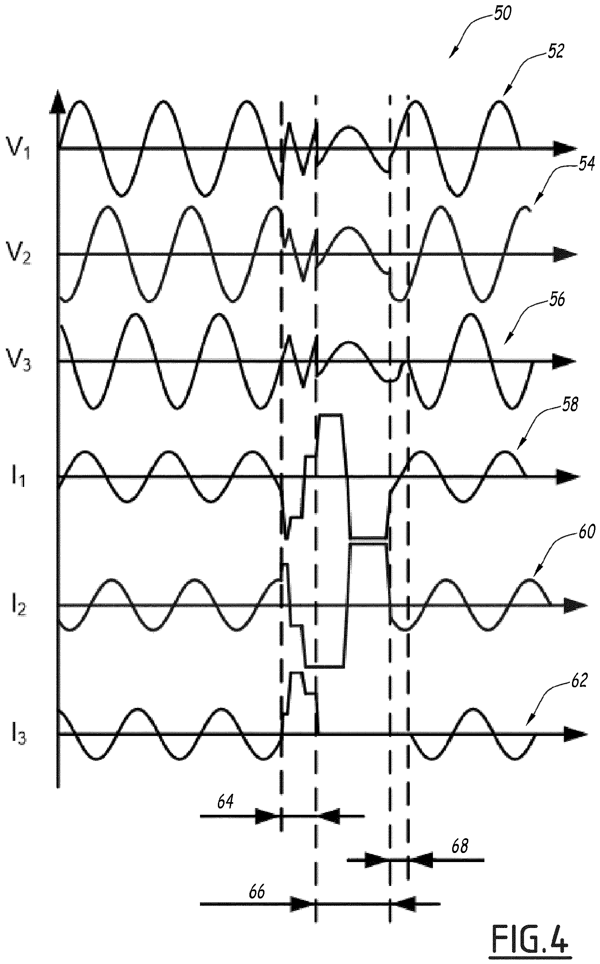

Par exemple, chacun des capteurs de tension 40, 42 et 44 est par exemple connecté à deux des trois conducteurs de phase (associés aux première, deuxième et troisième phases électriques) qui raccordent le dispositif de stockage d'électricité 12 au reste de l'installation 2 pour mesurer par exemple les trois tensions composées distribuées par les trois conducteurs de phase (notées respectivement V1, V2 et V3 sur la figure 4).

Le dispositif de commutation 48 comporte un interrupteur pilotable monté sur l'un des conducteurs de phase, cet interrupteur pouvant commuter entre un état électriquement ouvert et un état électriquement fermé. Par exemple, le dispositif de commutation 48 est un commutateur électromécanique, ou un commutateur à semi-conducteurs, ou un commutateur hybride (utilisant à la fois des technologies électromécanique et à semi-conducteurs), ou tout dispositif approprié.

Par exemple, le dispositif électronique de commande 46 comporte un processeur, tel qu'un microcontrôleur programmable ou un microprocesseur. Dans une variante, le dispositif de commande peut être réalisé dans une technologie analogique, câblée ou mixte. Le processeur est couplé à une mémoire informatique, ou à un support d'enregistrement de données lisible par ordinateur, comportant des instructions exécutables et/ou un code logiciel prévu pour mettre en œuvre un procédé de détection d'un défaut électrique tel que décrit ci-après lorsque ces instructions sont exécutées par le processeur.

En variante, le dispositif électronique 46 de commande peut comporter un processeur de traitement du signal (DSP), ou un contrôleur logique programmable (PLC), ou un composant logique reprogrammable (FPGA), ou un circuit intégré spécialisé (ASIC), ou tout élément (ou système) équivalent.

Le dispositif électronique de commande 46 comporte des entrées pour recevoir des signaux de mesure issus des capteurs 40, 42 et 44. Le dispositif électronique de commande 46 comporte également une sortie raccordée au dispositif de commutation 48 pour envoyer des ordres de pilotage vers le dispositif de commutation 48.

Le dispositif de protection auxiliaire 20 est programmé pour intervenir en cas de court-circuit affectant les phases électriques (sans affecter une éventuelle ligne de neutre).

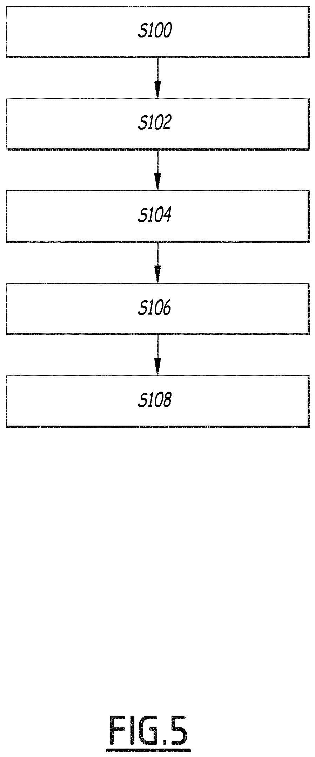

Dans de nombreux modes de réalisation, comme illustré en référence aux figures 4 et 5, le dispositif de protection auxiliaire 20 est plus particulièrement configuré pour mettre en œuvre un procédé comportant des étapes consistant à :
- mesurer (étape S100), par les capteurs de tension 40, 42, 44 du dispositif de protection auxiliaire 20, les tensions électriques alternatives V1, V2 et V3 distribuées par les conducteurs de phase raccordant ladite source électrique 12 au reste de l'installation électrique ;
- analyser automatiquement (étape S102) les valeurs des tensions mesurées par des capteurs de tension 40, 42, 44, par le dispositif électronique de commande 46, pour identifier une condition représentative d'un défaut électrique, notamment une condition représentative d'un court-circuit triphasé sans neutre ;
- détecter un défaut électrique (étape S104) de type court-circuit triphasé sans neutre, à partir des tensions électriques mesurées;
- déclencher l'ouverture (étape S106) du dispositif de commutation 48 du dispositif de protection auxiliaire 20 lorsqu'un défaut électrique est identifié par le dispositif électronique de commande 46.

Cette ouverture a pour conséquence de déconnecter un desdits conducteurs de phase (le troisième conducteur associé à la troisième phase par exemple), ledit dispositif de commutation 48 étant connecté sur un desdits conducteurs de phase entre ladite source électrique 12 et le reste de l'installation électrique.

De préférence, suite à l'ouverture du dispositif de commutation 48 par le dispositif de protection auxiliaire 20 pendant l'étape S106, le courant électrique circule alors entre ladite source électrique 12 et le reste de l'installation électrique seulement dans lesdits conducteurs de phase correspondant aux phases qui n'ont pas été déconnectées de la source 12 (en l'occurrence, dans la première phase et la deuxième phase, puisque la troisième phase a été déconnectée dans l'étape S106).

Ce courant électrique, qui ne circule alors plus que sur deux phases au lieu de trois phases, conduit au déclenchement (étape S108) d'un des appareils de protection CB_2_2, CB_2_3.

En effet, la valeur RMS du courant résultant est plus élevée, puisque le courant électrique ne dispose plus que deux phases au lieu de trois pour circuler, au point de dépasser le seuil de protection de l'appareil de protection correspondant.

En d'autres termes, lors de l'étape S106, on transforme un court-circuit présent sur trois phases en un court-circuit présent sur deux phases pour augmenter la valeur RMS du courant qui circule sur les phases restantes et ainsi forcer un déclenchement d'au moins un appareil de protection.

En pratique, les appareils de protection (CB_1_2, CB_1_3, CB_3_1, CB_2_2, CB_2_3) sont configurés de manière à présenter une sélectivité prédéfinie à l'échelle de l'installation électrique 2.

Dans l'exemple illustré, on considère que le défaut se produit au niveau de la charge électrique 14. L'appareil de protection correspondant est alors déclenché, pour déconnecter la charge électrique 14. Ce déclenchement est causé par l'appareil de protection lui-même, lorsque son déclencheur détecte une augmentation anormale du courant électrique sur la première phase et la deuxième phase correspondant aux conducteurs de phase qui n'ont pas été déconnectées lors de l'étape S106.

Selon un exemple de réalisation, lors de l'étape S102 consistant à automatiquement analyser au moins les valeurs de tension mesurées pour identifier au moins une caractéristique représentative d'une condition de défaut. Lors de l'étape S104, un défaut électrique tel qu'un court-circuit entre les trois phases électriques est considéré comme étant détecté si une telle condition est identifiée.

De préférence, la forme des tensions mesurées V1, V2 et V3 est analysée pour déterminer le déphasage entre les tensions mesurées V1, V2, V3, et notamment pour détecter si les tensions sont en phase. En effet, dans le cas où le court-circuit concerne les trois phases, alors les tensions électriques correspondantes ne sont plus déphasées, alors qu'elles sont déphasées en fonctionnement normal. La condition de défaut est donc identifiée lorsque le déphasage est nul.

Dans des modes de réalisation alternatifs, la détection d'un défaut, notamment d'un défaut de type court-circuit, pourrait être basée au moins en partie sur un autre critère, par exemple la valeur des tensions mesurées, mais aussi la forme des courants électriques I1, I2 et I3. Comme on le verra en référence à la figure 4, en présence d'un défaut tel qu'un court-circuit entre phases, les courants électriques I1, I2 et I3 pourraient être mesurés à la place des tensions V1, V2 et V3 pour identifier la forme spécifique des courants en présence d'un court-circuit triphasé (telle que la forme en paliers pendant la séquence 64 décrite ci-après en référence à la figure 4). Les capteurs 40, 42 et 44 seraient alors adaptés en conséquence, par exemple pour être remplacés par des capteurs de courant, ou complétés par des capteurs de courant.

De façon générale, dans d'autres modes de réalisation, le procédé est modifié de telle sorte que la mesure des tensions dans l'étape S100 est remplacée par la mesure d'une ou de plusieurs grandeurs électriques associées aux conducteurs de phase (telle que la tension, le courant, la phase, et bien d'autres encore), l'analyse et la détection (étapes S102 et S104) étant alors réalisées à partir de ces mesures de grandeurs électriques et non plus à partir des seules mesures de tension.

La condition de défaut serait alors modifiée en conséquence. Par exemple, l'étape d'analyse automatique (S102) des grandeurs électriques mesurées pourrait comporter, selon la nature des grandeurs mesurées, une comparaison d'au moins une partie des valeurs mesurées avec un seuil de référence prédéfini ou avec une forme d'onde de référence. Le défaut électrique tel qu'un court-circuit entre les trois phases électriques serait considéré comme étant détecté (S104) si les valeurs mesurées sont considérées comme suffisamment basses et/ou similaires (c'est-à-dire qu'elles présentent une forme d'onde similaire, éventuellement à une valeur d'offset près, cette valeur d'offset étant due à l'impédance de ligne, qui peut ne pas être la même pour chacun des conducteurs de phase).

Dans de nombreux modes de réalisation, le procédé peut être répété au cours du temps, par exemple au moins pour les étapes S102 et S104, qui peuvent être répétées de façon continue ou périodiquement ou à intervalles prédéfinis.

En variante, les étapes pourraient être exécutées dans un ordre différent. Certaines étapes pourraient être omises. L'exemple décrit ne fait pas obstacle à ce que, dans d'autres modes de réalisation, d'autres étapes soient mises en œuvre conjointement et/ou séquentiellement avec les étapes décrites.

Dans certains modes de réalisation, le dispositif de protection auxiliaire 20 est intégré à un appareil de protection associé à ladite source électrique 12, par exemple l'appareil CB_1_3. Ainsi, le dispositif de protection auxiliaire 20 peut réutiliser des éléments de l'appareil de protection, tels que des capteurs et/ou le dispositif électronique de commande et/ou le dispositif de commutation d'une des phases. En variante, le dispositif de protection auxiliaire 20 peut soit être un appareil distinct de l'appareil de protection (CB_1_3) associé à ladite source électrique 12, soit être un appareil distinct mais utilisant des ressources de l'appareil de protection via une connexion appropriée.

La figure 4 illustre plus en détail le fonctionnement de l'installation lors de la mise en œuvre du procédé.

Sur cet exemple, le graphe 50 représente l'évolution des tensions électriques V1, V2, V3 (courbes 52, 54 et 56 respectivement) et des courants électriques I1, I2 et I3 (courbes 58, 60 et 62 respectivement) représentés en ordonnées, suivant une échelle arbitraire, en fonction du temps (noté t, en abscisses, suivant une échelle arbitraire) pour chacune des phases électriques de l'installation, au niveau d'un équipement électrique de l'installation 2 qui est à l'origine d'un défaut électrique (par exemple, la charge électrique 14 est à l'origine d'un défaut électrique).

La première phase, la deuxième phase et la troisième phase sont associées respectivement aux première, deuxième et troisième tensions électriques V1, V2 et V3. La première phase, la deuxième phase et la troisième phase sont associées respectivement premier, deuxième et troisième courants électriques 11, I2 et I3. Comme visible sur la figure 4, initialement, le courant électrique présente par exemple une forme sinusoïdale périodique et régulière. Les composantes I1, I2 et I3 de chacune des phases, illustrées respectivement par les courbes 58, 60 et 62, présentent des formes d'onde sinusoïdales, déphasées les unes par rapport aux autres.

Lors de l'apparition d'un défaut électrique, tel qu'un court-circuit entre la première phase et la deuxième phase, le dispositif de protection auxiliaire 20 détecte rapidement le défaut (par exemple, pendant la première séquence de fonctionnement identifiée par la référence 64 sur la figure 4). Pendant la première séquence de fonctionnement 64, la forme d'onde des courants et des tensions commence à changer. Dans la deuxième séquence de fonctionnement 66, la forme d'onde des courants et des tensions est temporairement stabilisée.

Dans l'exemple illustré, les courants électriques I1, I2 et I3 présentent chacun une forme irrégulière en prenant des valeurs définies par paliers, généralement entre deux valeurs de saturation égales mais de signe opposé. Par exemple, les paliers correspondent à des valeurs intermédiaires correspondant à un tiers ou à deux tiers de la valeur de saturation. Ce comportement s'explique par le fait que, en l'absence de ligne de neutre, la somme des courants électriques I1, I2 et I3 est nulle à chaque instant.

Ensuite, le dispositif de protection auxiliaire 20 ouvre le dispositif de commutation 48 pour interrompre la circulation du courant électrique en déconnectant le conducteur de phase correspondant (par exemple, pendant la deuxième séquence de fonctionnement identifiée par la référence 66 sur la figure 4), de préférence au niveau de la source 12.

Dans cet exemple, il s'agit de la troisième phase qui est ouverte par le dispositif de commutation 48. En pratique, le dispositif de commutation 48 est associé à un seul conducteur de phase.

En pratique, dans le cas où plusieurs sources à convertisseurs de puissance se trouveraient dans la même installation, alors il y aurait, suivant l'agencement de l'installation, soit au moins un dispositif de commutation pour l'ensemble des sources, soit un dispositif de commutation pour chaque source, soit une combinaison de dispositifs de commutation appropriée à l'agencement de l'installation.

Suite à l'ouverture du dispositif de commutation 48 et de la déconnexion de ladite phase électrique, le courant augmente fortement sur la première phase et la deuxième phase, pour lesquelles le courant peut toujours circuler depuis la source 12, comme visible sur la figure 4 à partir de la deuxième ligne verticale en traits pointillés (courants I₁ et I₂ sur la première phase et la deuxième phase).

En parallèle, le courant I₃ circulant sur la troisième phase s'interrompt et prend alors une valeur nulle.

En réponse à cette augmentation sur la première phase et la deuxième phase (dans cet exemple), l'un des appareils de protection électrique de l'installation 2, par exemple l'appareil de protection CB_2_2 associé à l'équipement 14 qui dans cet exemple est à l'origine du défaut électrique, se déclenche et commute vers l'état ouvert, ce qui déconnecte l'équipement qui est à l'origine du défaut électrique et fait disparaître le courant de défaut (le courant de court-circuit dans l'exemple considéré).

Cela est visible sur la figure 4 à partir de la troisième ligne verticale en traits pointillés (marquant la fin de la deuxième séquence de fonctionnement 66 et début de la troisième séquence de fonctionnement identifiée par la référence 68), où les composantes de tension de chacune des phases, distribuées en entrée de chaque charge critique, se différentient les unes des autres pour retourner vers leurs formes d'onde normales.

Avantageusement, une fois que le défaut électrique (par exemple, le court-circuit) a disparu grâce au déclenchement de l'appareil de protection, alors le dispositif de protection auxiliaire 20 commande la reconnexion de la phase électrique qui avait été précédemment déconnectée lors de l'étape S106, par exemple en pilotant le dispositif de commutation 48.

Par exemple, le dispositif de protection auxiliaire 20 détecte que le défaut électrique a disparu en identifiant que la condition de défaut a disparu. Par exemple, le dispositif de protection auxiliaire 20 détecte que les tensions V1, V2 et V3 associées aux trois phases électriques sont à nouveau déphasées. Dans l'exemple illustré sur la figure 4, cela correspond au comportement du système après la fin de la troisième séquence 68, où les tensions et les courants de chaque phase reprennent chacun une forme d'onde normale.

Grâce à l'invention, le dispositif de protection auxiliaire 20 permet de détecter plus rapidement et de façon plus sure un défaut électrique, notamment un court-circuit entre les trois phases électriques, qu'une installation équipée uniquement d'appareils de protection électrique munis de déclencheurs classiques.

En effet, dans des installations comportant une source électrique comprenant ou étant basée sur un convertisseur de puissance à découpage, le courant de défaut présente une amplitude moindre qu'avec des sources électriques classiques (telles qu'un réseau électrique public ou un générateur de groupe électrogène), au point que les déclencheurs classiques peuvent ne pas détecter un tel défaut.

Le dispositif de protection auxiliaire 20 apporte une amélioration à cette limitation.

En déconnectant l'une des phases lorsqu'il détecte un tel défaut électrique, le dispositif de protection auxiliaire 20 crée une augmentation du courant RMS sur les phases restantes, ce qui rend d'avantage visible l'apparition d'un défaut. Comme l'amplitude du courant de défaut est plus élevée que celle du « vrai » défaut, le défaut ainsi amplifié est rapidement détecté par le déclencheur de l'appareil de protection connecté directement en amont de l'équipement à l'origine du défaut.

Ainsi, le système de protection 4 permet de répondre rapidement à l'apparition d'un défaut électrique, notamment un court-circuit entre les trois phases électriques, tout en respectant les règles de sélectivité définies à l'échelle de l'installation 2.

On évite ainsi que la source électrique 12 soit entièrement interrompue, voire que toute l'installation électrique 2 soit arrêtée, parce que l'appareil de protection connecté directement en amont de l'équipement à l'origine du défaut n'aurait pas été assez sensible ou assez rapide pour détecter le défaut électrique.

Grâce au système de protection 4, on peut sélectionner, dans une telle installation électrique 2, pour les appareils de protection électriques (autres que le dispositif de protection auxiliaire 20), des calibres en courant plus élevés, tout en ayant l'assurance qu'un défaut électrique, tel qu'un court-circuit entre les trois phases électriques, sera détecté grâce au dispositif de protection auxiliaire 20.

Des évaluations sur plusieurs gammes d'appareils de protection ont permis de montrer que l'on peut augmenter le calibre en courant d'au moins 10%, et jusqu'à 27% pour certaines gammes d'appareils, toutes choses étant égales par ailleurs.

Les modes de réalisation et les variantes envisagés ci-dessus peuvent être combinés entre eux pour créer de nouveaux modes de réalisation.

## Revendications

1. Procédé de protection électrique pour détecter un défaut électrique dans une installation électrique (2), ladite installation électrique comportant au moins une source électrique (12) basée sur un convertisseur de puissance à découpage et un système de protection (4), ladite source électrique (12) étant raccordée au reste de l'installation électrique triphasée par des conducteurs de phase, le système de protection (4) comprenant au moins un appareil de protection (CB_1_2, CB_1_3, CB_3_1, CB_2_2, CB_2_3) et un dispositif de protection auxiliaire (20) associé à la source électrique, le procédé comportant des étapes consistant à :
- mesurer (S100) des grandeurs électriques par le dispositif de protection auxiliaire (20), les grandeurs électriques étant associées aux conducteurs de phase ;
- analyser automatiquement (S102) les grandeurs électriques mesurées, au moyen d'un dispositif électronique de commande (46) du dispositif de protection auxiliaire (20), pour identifier une condition représentative d'un court-circuit entre lesdits conducteurs de phase ;
- détecter un défaut électrique (S104), tel qu'un court-circuit entre les trois phases électriques associées auxdits conducteurs de phase sans implication d'un éventuel conducteur de neutre, à partir des grandeurs électriques mesurées ;
- déclencher l'ouverture (S106) d'un dispositif de commutation (48) du dispositif de protection auxiliaire (20) lorsqu'un défaut électrique est identifié par le dispositif électronique de commande (46), pour déconnecter un desdits conducteurs de phase, ledit dispositif de commutation (48) étant connecté sur un desdits conducteurs de phase entre ladite source électrique (12) et le reste de l'installation électrique.

2. Procédé selon la revendication 1, dans lequel les grandeurs électriques sont des tensions électriques alternatives (V1, V2, V3) mesurées sur les conducteurs de phase raccordant ladite source électrique (12) au reste de l'installation électrique, la mesure desdites tensions électriques étant réalisée par des capteurs de tension (40, 42, 44) du dispositif de protection auxiliaire (20).

3. Procédé de protection électrique selon la revendication 1 ou la revendication 2, dans lequel, suite à l'ouverture du dispositif de commutation (48) par le dispositif de protection auxiliaire (20), le courant électrique circulant entre ladite source électrique (12) et le reste de l'installation électrique dans lesdits conducteurs de phase qui n'ont pas été ouverts, ce courant conduisant au déclenchement (S108) d'au moins un des appareils de protection (CB_2_2, CB_2_3).

4. Procédé de protection électrique selon l'une quelconque des revendications précédentes, dans lequel analyser automatiquement (S102) les grandeurs électriques mesurées comporte une comparaison d'au moins une partie des valeurs mesurées avec un seuil de référence prédéfini ou avec une forme d'onde de référence, et dans lequel un défaut électrique tel qu'un court-circuit entre les trois phases électriques est détecté (S104) si les valeurs mesurées sont considérées comme suffisamment basses et/ou similaires.

5. Procédé de protection électrique selon l'une quelconque des revendications précédentes, dans lequel les appareils de protection (CB_1_2, CB_1_3, CB_3_1, CB_2_2, CB_2_3) sont configurés de manière à présenter une sélectivité prédéfinie à l'échelle de l'installation électrique (2).

6. Système de protection électrique (4) pour une installation électrique (2) comportant au moins une source électrique (12) basée sur un convertisseur de puissance à découpage, le système de protection comportant au moins un appareil de protection électrique (CB_1_2, CB_1_3, CB_3_1, CB_2_2, CB_2_3) et un dispositif de protection auxiliaire (20) associé à la source électrique, le dispositif de protection auxiliaire (20) étant configuré pour :
- mesurer (S100) des grandeurs électriques par le dispositif de protection auxiliaire (20), les grandeurs électriques étant associées aux conducteurs de phase ;
- analyser automatiquement (S102) les grandeurs électriques mesurées, au moyen d'un dispositif électronique de commande (46) du dispositif de protection auxiliaire (20), pour identifier une condition représentative d'un court-circuit entre lesdits conducteurs de phase ;
- détecter un défaut électrique (S104), tel qu'un court-circuit entre les trois phases électriques associées auxdits conducteurs de phase, à partir des grandeurs électriques mesurées ;
- déclencher l'ouverture (S106) d'un dispositif de commutation (48) du dispositif de protection auxiliaire (20) lorsqu'un défaut électrique est identifié par le dispositif électronique de commande (46), pour déconnecter un desdits conducteurs de phase, ledit dispositif de commutation (48) étant connecté sur un desdits conducteurs de phase entre ladite source électrique (12) et le reste de l'installation électrique.

7. Système de protection électrique (4) selon la revendication 6, dans lequel le dispositif de commutation (48) comporte un interrupteur électromécanique, ou un interrupteur à semi-conducteurs ou un interrupteur hybride.

8. Système de protection électrique (4) selon l'une quelconque des revendications 6 à 7, dans lequel le dispositif de protection auxiliaire (20) est intégré à un appareil de protection (CB_1_3) associé à ladite source électrique (12).

9. Système de protection électrique (4) selon l'une quelconque des revendications 6 à 7, dans lequel le dispositif de protection auxiliaire (20) est un appareil distinct d'un appareil de protection (CB_1_3) associé à ladite source électrique (12).

10. Installation électrique (2) comportant une source électrique (12) basée sur un convertisseur de puissance à découpage et un système de protection (4) conforme à l'une quelconque des revendications 6 à 9.
